# EUROPEAN PATENT APPLICATION

(11) **EP 2 671 845 A1**
(43) Date of publication of application: **11.12.2013**
(21) Application number: 12170700.4
(22) Date of filing: 04.06.2012
(51) Int. Cl.: C01D 3/16, C01D 3/24

(54) **Crystallisation assisted membrane separation process**

(71) Applicant: Nederlandse Organisatie voor Toegepast -Natuurwetenschappelijk Onderzoek TNO, 2628 VK Delft (NL)
(72) Inventor: van Medevoort, Jolanda, 2628 VK Delft (NL); Creusen, Raymond Johannes Maria, 2628 VK Delft (NL); Roelands, Cornelis Petrus Marcus, 2628 VK Delft (NL); van Renesse Van Duivenbode, Johannes Alexander Diederik, 2628 VK Delft (NL)
(74) Representative: Jansen, Cornelis Marinus

(57) **Abstract**

The invention is directed to a process for separating a compound from an aqueous feed stream wherein said compound is dissolved.

The process of the invention comprises
- adding a crystallisation agent to said feed stream, thereby causing at least part of said first compound to crystallise, resulting in a mixture of crystals and a liquid,
- separating at least part of the crystals from the liquid, leaving a supernatant,
- subjecting at least part of the supernatant to a membrane separation process, producing a concentrate;

wherein the crystallisation agent comprises a second compound with a higher solubility in water than the first compound.

## Description

The invention is directed to a process for separating one or more compounds from an aqueous feed stream wherein said compounds are dissolved.

In many processes in industry wastewater streams are produced that have substantial concentrations of dissolved compounds, such as salts. Discharging such streams into the environment is subject to increasingly strict regulations. In particular the discharge of salt wastewater streams is subject to strict regulations and is often not allowed. There is an increasing demand for technologies to process these waste streams, which technologies ideally are capable of separating the waste streams into pure water and solid compounds. The available technologies, however, are not suitable to do this economically, with sufficient separation quality and with good energy efficiency.

Many thermal and evaporation methods for desalination of seawater or brine to produce pure water and more concentrated brine are known. These methods, however, suffer from scaling and corrosion problems and have high energy consumption. Moreover, the produced brine has to be discharged or further processed.

Primarily because of the high energy costs involved for thermal processes, many recent desalination methods are based on membrane separation. Examples of desalination methods based on membrane separation are membrane distillation (MD), osmotic distillation (OD), nanofiltration (NF), reverse osmosis (RO), electrodialysis (ED) and electrodialysis reversal (EDR).

Membrane separation methods like RO and NF are not suitable for use at high salt concentrations, because of the high osmotic pressure of the water. A technique like MD/OD is suitable for high concentration, but not for crystallisation, because of crystallisation of salts at the membrane external and internal surface, resulting in clogging of the membrane and a decreased flux through the membrane. Desalination of salt water with these methods results in a more concentrated brine waste stream. An energy efficient method for the processing of aqueous feed streams, in particular brine waste streams is therefore desirable.

A process comprising induced crystallisation, membrane reverse osmosis and nanofiltration to make inorganic salt compositions, drinking and/or process water from a solution is disclosed in WO-A-2004/096404. In this process, PEG600 (polyethylene glycol having an average molecular weight of 600 g/mol) is used as crystallisation agent. This process has the disadvantage that a foreign substance is introduced, which can contaminate the products. Furthermore, at least 60 % of the retentate of the reverse osmosis step is subjected to a membrane nanofiltration step for recovery of the crystallisation agent.

Antisolvent assisted crystallisation of sodium chloride using amines is described in T.G. Zijlema, "The Antisolvent Crystallization of Sodium Chloride", Delft University Press, Delft, 1999. The use of a membrane separation step is not disclosed.

In summary, the most important shortcomings of the prior art processes are crystallisation in and at the external and internal membrane surface at the retentate side of the membrane resulting in clogging of the membrane, the production of a more concentrated brine waste stream which has to be further processed or discharged into the environment, high energy costs and risk of contamination of the products because of the addition of foreign substances to the feed stream.

Objective of the invention is to provide a solution, to one or more of the above-mentioned disadvantages.

The inventors found that this objective can at least in part be met by a process comprising crystallisation and a membrane separation process.

In a first aspect, the invention relates to a process for separating a first compound from an aqueous feed stream wherein the first compound is dissolved, comprising: adding a crystallisation agent to said feed stream, thereby causing at least part of said first compound to crystallise, resulting in a mixture of crystals and a liquid, separating at least part of the crystals from the liquid, leaving a supernatant, subjecting at least part of the supernatant to a membrane separation process, producing a concentrate; wherein the crystallization agent comprises a second compound with a higher solubility in water than the first compound.

The invention advantageously allows for a process wherein crystallisation in and at the external and internal membrane surface at the retentate side of the membrane is prevented or at least reduced. With this invention, the production of a more concentrated brine waste stream is avoided and energy costs and risk of contamination are minimised.

One or more compounds may be separated as first compound from the feed stream by the process. At least part of the first compound is caused to crystallise by adding a crystallisation agent to the feed stream.

The addition of the crystallisation agent may occur continuously, periodically or once. The crystallisation agent and feed stream may be mixed during the addition and crystallisation.

The crystallisation agent can suitably comprise a solid material, liquid, a solution and/or a mixture. The crystallisation agent preferably comprises an aqueous solution of the second compound. This provides the advantage that no organic solvent is required, providing reduced risk of contamination of products of the process.

The crystallisation agent comprises a second compound with a higher solubility in water than the first compound. The first compound and second compound are different from each other. The second compound preferably comprises a salt. The crystallisation agent may comprise multiple second compounds each with a higher solubility in water than the first compound.

In case of multiple first compounds, the second compound has a higher solubility in water than the first compounds. By addition of the crystallisation agent, the solubility of the first compound is reduced, causing crystallisation of the first compound. This results in a mixture of crystals and a liquid. The crystals comprise at least part of the first compound, preferably 50 wt.% or more, more preferably 80 wt.% or more, more preferably 90 wt.% or more of the first compound relative to the amount of the first compound in the feed stream volume from which the crystals were obtained. The crystals comprise preferably 75 wt.% or more first compound by the total weight of the crystals, more preferably at 90 wt.% or more, most preferably 99 wt.% or more. The supernatant comprises at least part of the crystallisation agent, preferably 99 wt.% or more, relative to the amount of crystallisation agent added to cause the formation of the supernatant.

The crystals may consist of particles. At least part of the crystals is separated from the liquid, leaving a supernatant and the separated crystals. Suitable separation processes include precipitation, filtration, decanting, centrifugation, sedimentation, hydro cyclones and any other solid/liquid separation technologies and combinations of these. The crystals are not necessarily free of water; the crystals may contain bound water and/or water of crystallisation. The crystals may contain some crystallisation agent and/or second compound, preferably less than 1 wt.%, more preferably less than 0.1 wt.% based on total weight of the crystals.

At least part of the supernatant is subjected to a membrane separation process, suitably thereby reducing the amount of water in the supernatant, producing a concentrate. The amount of water in the supernatant is suitably reduced as water and/or water vapour selectively passes through the membrane. The membrane separation process suitably comprises selectively passing water and/or water vapour through the membrane. The amount of water in the supernatant can be expressed as the w/w concentration of water in the supernatant. Water is suitably obtained as permeate/distillate or component of the permeate/distillate at the opposite side of the membrane of the concentrate. The water so obtained is a product of the process. The permeate/distillate is preferably pure water, preferably the concentration of second compound in the permeate/distillate is 2 wt.% or less of the concentration of the second compound in the supernatant.

Preferably, the process further comprises adding at least part of the concentrate to the feed stream as crystallisation agent; preferably 50 wt.% or more of the concentrate, more preferably 90 wt.% or more, even more preferably 95 wt.% or more. This provides the advantage that the crystallisation agent, in particular the second compound, is at least partly recycled, resulting in reduced consumption of crystallisation agent and/or second compound. The concentrate is preferably directly added without a further membrane separation process.

Preferably, the crystallisation agent comprises at least part of the concentrate, preferably the crystallisation agent comprises 50 wt.% or more concentrate, more preferably 90 wt.% or more, based on total weight of the crystallisation agent.

Preferably, the first compound comprises one or more selected from the group consisting of inorganic salts, organic salts, organic compounds, polymers, sugars and proteins. Preferably, the first compound comprises a salt, more preferably an inorganic salt, more preferably sodium chloride. Suitably, the first compound is sodium chloride.

Preferably, the feed stream comprises one or more selected from the group consisting of seawater, seawater concentrate and sodium chloride brine. In particular in case the first compound comprises sodium chloride, the feed stream suitably comprises one or more selected from the group consisting of seawater, seawater concentrate and sodium chloride brine.

Preferably, the feed stream comprises an aqueous inorganic salt solution, more preferably a sodium chloride solution, for example seawater, ground water, a process waste stream and/or brine. The feed stream can comprise a waste stream produced by a membrane separation process and/or dewatering process, such as reverse osmosis, multi stage flash distillation and/or multi effect distillation. For example, the feed stream can comprise a wastewater stream from a dewatering process, such as the Memstill^{®} process described in WO-A-2000/72947.

Preferably, the second compound comprises a compound dissolved in the feed stream different from the first compound.

Specifically, in case the second compound comprises a salt, the anion and cation of that salt are preferably selected from the group consisting of anions and cations, respectively, present in the feed stream.

The second compound is preferably not foreign to the feed stream. The feed stream preferably comprises the second compound, preferably as solute. This provides the advantage that contamination of products of the process due to addition of the second compound is avoided.

Preferably, the second compound comprises an inorganic salt, more preferably sulphates, chlorates, chlorides and phosphates soluble in water. Preferably the second compound comprises one or more selected from the group consisting of magnesium chloride, calcium chloride, potassium chloride, magnesium bromide, calcium bromide and potassium bromide; more preferably magnesium chloride, calcium chloride and potassium chloride. Most preferably the second compound comprises calcium chloride.

Preferably, the second compound comprises a salt selected from the group consisting of salts with a common ion with the first compound. This provides the advantageous common ion effect, reducing the solubility of the first compound.

In case the first compound comprises a metal chloride, such as sodium chloride, the second compound preferably comprises one or more selected from the group consisting of alkali chlorides and alkali earth metal chlorides with a higher solubility than sodium chloride; such as calcium chloride, potassium chloride and magnesium chloride in case the first compound comprises sodium chloride. Preferably, the second compound comprises an aqueous calcium chloride solution.

The concentration of the first compound in the supernatant is lower than the concentration of the first compound in the feed stream.

Preferably, the concentration of the first compound in the supernatant is reduced by 50 % or more, more preferably 80 % or more, more preferably 90 % or more, compared to the concentration of the first compound in the feed stream.

For an amount of feed stream a corresponding, not necessarily equal, amount of supernatant is obtained. Preferably, the amount of the first compound in an amount of the supernatant is 50 wt.% or less, preferably 20 wt.% or less, more preferably 10 wt.% or less, of the amount of the first compound in the amount of the feed stream from which said amount of supernatant was obtained. In this way, effective separation of the first compound from the feed stream is obtained.

Preferably, the concentration of the second compound in the supernatant is 90 % or less of its saturation concentration, more preferably 80 % or less, more preferably 75 % or less, more preferably 50 % or less. This provides the advantage that at least some water can be extracted from the supernatant in the membrane separation process to produce concentrate and water, without the second compound concentration becoming larger than the saturation concentration of the second compound. The saturation concentration relates to the operating conditions, such as temperature, during crystallisation and separation of the precipitate, as well as during the membrane separation process. This provides reduced deposition of the second compound during the membrane separation process.

Preferably, the membrane separation process comprises one or more selected form the group consisting of membrane distillation, forward osmosis and osmotic distillation; preferably osmotic distillation. Osmotic distillation can be combined with a temperature difference over the membrane.

Preferably, during the membrane separation process a first side of the membrane is contacted with the supernatant and a second side is contacted with a drawing liquid.

The side of the membrane in contact with the supernatant is referred to as the retentate side, the other side is referred to as the distillate and/or permeate side.

In membrane distillation, water vapour passes through a membrane from the retentate side to the distillate side, due to a water vapour pressure drop over the membrane. This has the advantage that (almost) pure water vapour passes through the membrane. The water is obtained at the distillate side.

The drawing liquid may be used to establish a water vapour pressure at the distillate side of the membrane lower than the water vapour pressure at the retentate side. A drawing liquid suitably comprises a drawing agent capable of decreasing the vapour pressure of water in the aqueous solution. Preferred drawing agents include calcium chloride, lithium chloride, magnesium chloride, potassium chloride, and magnesium bromide. Optionally, the drawing agent and the second compound are the same. Suitable drawing liquid include 20-45 wt.% aqueous CaCl₂ solution, such as 30-45 wt.% and/or 40-45 wt.% aqueous CaCl₂ solution.

The water vapour pressure difference may also be obtained by a combination of drawing liquid and temperature difference between the distillate and retentate side of the membrane. For example, if the membrane separation process is carried out in a module comprising a membrane, an inlet for supernatant and an outlet for concentrate, both at the retentate side of the membrane, and if the supernatant is composed of 9 mol water, 1 mol calcium chloride and saturated in NaCl at 80 °C, the boiling point elevation is 21.4 °C. If the amount of water is decreased to for example 4 mol at the outlet, the boiling point elevation is 36.7 °C at the outlet. Using for example a 35 wt.% calcium chloride solution as drawing liquid, the boiling point elevation to be overcome is 7.2 °C at the inlet and 22.5 °C at the outlet. An additional temperature difference is required for realisation of water vapour flux through the membrane that depends on the temperature. The membrane separation process can occur at various temperatures. For osmotic distillation and for membrane distillation, a higher temperature of both the supernatant and distillate is preferred because it provides a larger vapour pressure and therefore water flux through the membrane at the same temperature difference between supernatant and distillate.

In order to recover water from the distillate, at least part of the distillate may be directed to a separation process for separating the drawing agent from water. Suitable separation processes include multi effect distillation, vapour compression evaporation, any other evaporation technology and combinations of these. Such a separation process can also be a membrane separation process, e.g. membrane distillation. Preferably, the concentration of the drawing agent in the drawing liquid is such that the separation of the drawing agent from water occurs in a single separation step. Recovered drawing agent is suitably recycled to the distillate side of the membrane of the process in which the supernatant is concentrated. Preferably the drawing agent concentration in the drawing liquid is below the saturation point of the drawing agent, to prevent crystal formation during regeneration of the drawing agent. Preferably the concentration is 95 % or less, more preferably 85 % or less of its saturation concentration.

The membrane process step may comprise one or more membranes and accordingly multiple membrane separation steps, wherein permeate/distillate of a first membrane separation step is subjected to a further membrane separation step, for example for recovery of drawing agent.

Preferably, the process further comprises concentrating the feed stream prior to adding crystallisation agent. This provides the advantage of a more effective process. Suitable processes for concentrating the feed stream include membrane distillation processes, such as the Memstill^{®} process, described in WO-A-2000/72947, and the process described in international application number PCT/NL2011/050854.

Preferably, the process further comprises washing at least part of the separated crystals. At least part of the separated crystals, preferably all, can be washed one or multiple times. By washing, impurities can be removed. Moreover, washing can be used for recovery of at least part of crystallisation agent in the crystals. Crystallisation agent so recovered can be recycled in the process of the invention.

Optionally, the process further comprises drying, to at least some extent, of at least part of the crystals, without washing or after washing of the crystals.

Preferably, the process further comprises replenishing the crystallisation agent at least in part. In particular, the second compound is replenished by adding suitable amounts of the second compound to the crystallisation agent. This provides the advantage of mitigating the effect of the crystallisation of some second compound in the crystals. The second compound can be added to the concentrate, or to any other part of the process (e.g. to the feed stream).

Preferably, 50 wt.% or more of the first compound in the feed stream is crystallised and separated. Any first compound that is not crystallised or not separated (from the liquid) remains in the supernatant.

More preferably, 80 wt.% or more, most preferably 90 wt.% or more of the first compound in the feed stream is crystallised and separated. Preferably, these amounts of the first compound crystallise and are separated in one pass. If not, the first compound remaining in the supernatant will remain (partly) in the concentrate and be recycled with the concentrate, allowing for multiple passes through the process.

An amount of the first compound in the separated crystals corresponds to an amount of the feed stream from which the amount of the first compound was obtained; this corresponding amount of feed stream comprises the corresponding amount of the first compound in the feed stream, suitably as solute.

The process according to the present invention can be a continuous process or a batch process. Preferably, the process is a continuous process. This allows for large scale application.

Preferably, the crystallisation occurs at an operating temperature that is the same as the temperature of the feed stream or in a 20 °C range, preferably 10 °C, more preferably 5 °C range, above and below the temperature of the feed stream. This allows for the crystallisation step to occur without or with only limited cooling/heating, providing better energy efficiency.

The process can suitably be carried out in the temperature range of 5-120 °C, preferably in the range of 20-100 °C and more preferably in the range of 50-90 °C.

Suitably, the membrane separation process is performed at higher temperature than the crystallisation of the first compound. Suitably, the membrane separation process comprises heating/cooling the supernatant and/or the drawing liquid.

The term "comprising" includes "consisting of" and "consisting essentially of".

The invention is now further illustrated by the following non-limiting figures and examples.

### Figure 1

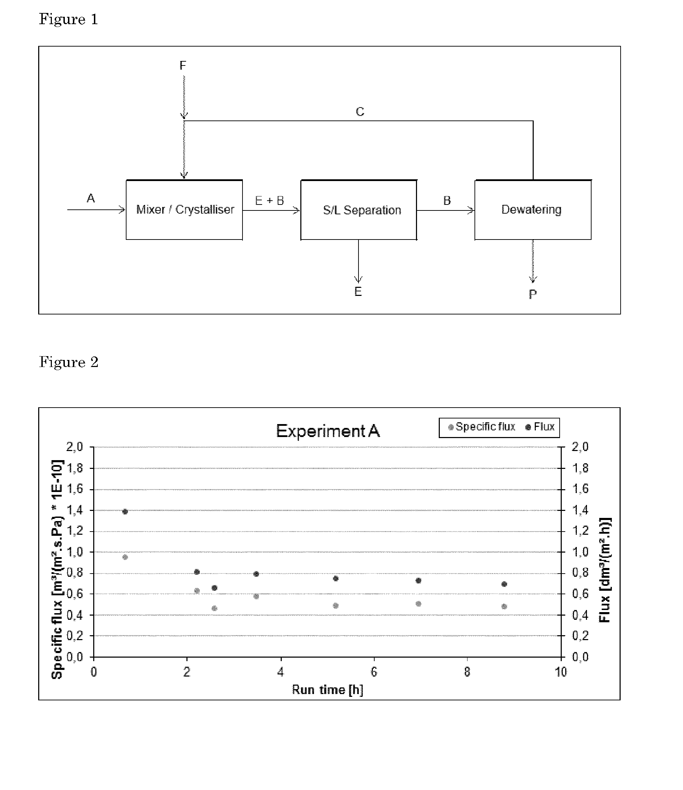

Figure 1: Process scheme of an exemplary process according to an embodiment of the invention. Feed stream A is subjected to crystallisation in a mixer/crystalliser (step 1); by addition of crystallisation agent D. Crystals E are formed. Crystals E and supernatant B are separated in a solid liquid (S/L) separation step (step 2). Supernatant B is subjected to a membrane separation process in a dewatering step (step 3), providing water as product P and concentrate C. Concentrate C is recycled as part of crystallization agent D. Crystallization agent D is replenished by addition of second compound F.

### Example 1

Product streams according to an embodiment of the process have been simulated for three passes at 80 °C using OLI analyzer 3.1.1 (OLI Systems Inc.). Feed stream A was calculated to be obtained from sea water composed of 55.51 mol H₂O and dissolved compounds according to Table 1, to which was added 537 mmol HCl to obtain pH 8.3 and wherein the amount of water was reduced to 4 mol H₂O by membrane distillation step MD I. The solids formed during MD I are given in Table 2 and are present in feed stream A. In the first pass, 5 mol water and 1 mol CaCl₂ are added as crystallization agent D in step 1. The composition of the formed crystals E is given in Table 3. The composition of the supernatant B is given in Table 4.

The supernatant B is subjected to membrane distillation step 2, in which the amount of water is reduced to 5 mol H₂O. The composition of the concentrate C is given in Table 5. Solids formed during step 2 are present in the concentrate C and are given in Table 6. Crystallization agent D is composed in the second and third pass of the concentrate C obtained in the previous pass and CaCl₂ replenishment solution F as necessary to contain set amounts of 1 mol CaCl₂ and 5 mol H₂O.

**Tabel 1 Feed**

| Element | Concentration (mg/l) | Element | Concentration (mg/l) |
|---|---|---|---|
| Oxygen | 8.57 × 10⁵ | Molybdenum | 0.01 |
| Hydrogen | 1.08 × 10⁵ | Zinc | 0.01 |
| Chlorine | 19000 | Nickel | 0.0054 |
| Sodium | 10500 | Arsenic | 0.003 |
| Magnesium | 1350 | Copper | 0.003 |
| Sulphur | 885 | Tin | 0.003 |
| Calcium | 400 | Uranium | 0.003 |
| Potassium | 380 | Chromium | 0.0003 |
| Bromine | 65 | Krypton | 0.0025 |
| Carbon | 28 | Manganese | 0.002 |
| Strontium | 8.1 | Vanadium | 0.001 |
| Boron | 4.6 | Titanium | 0.001 |
| Silicon | 3 | Caesium | 0.0005 |
| Fluorine | 1.3 | Cerium | 0.0004 |
| Argon | 0.6 | Antimony | 0.00033 |
| Nitrogen | 0.5 | Silver | 0.0003 |
| Lithium | 0.18 | Yttrium | 0.0003 |
| Rubidium | 0.12 | Cobalt | 0.00027 |
| Phosphorus | 0.07 | Neon | 0.00014 |
| Iodine | 0.06 | Cadmium | 0.00011 |
| Barium | 0.03 | Tungsten | 0.0001 |
| Aluminium | 0.01 | Lead | 0.00005 |
| Iron | 0.01 | Mercury | 0.00003 |
| Indium | < 0.02 | Selenium | 0.0000 |

**Table 2**

| **Component** | **Solids in Feed A (mol)** |
|---|---|
| **Calcium carbonate** | 1.529 × 10⁻³ |
| **Glauberite** | 7.991 × 10⁻³ |
| **Silicon dioxide (trigonal)** | 2.512 × 10⁻⁵ |

**Table 3 : Solids separated from mixer/separator (mol)**

| **Component** | **Pass 1** | **Pass 2** | **Pass 3** |
|---|---|---|---|
| **Sodium chloride** | 0.3692 | 0.4347 | 0.4689 |
| **Calcium carbonate** | 2.038 × 10⁻³ | 2.083 × 10⁻³ | 2.099 × 10⁻³ |
| **Calcium sulphate** | 0.0275 | 0.0276 | 0.0276 |
| **Fluorapatite** | 7.529 × 10⁻⁷ | 7.532 × 10⁻⁷ | 7.531 × 10⁻⁷ |
| **Aluminium oxide hydroxide (boehmite)** | 3.433 × 10⁻⁷ | 3.650 × 10⁻⁷ | 3.663 × 10⁻⁷ |
| **Iron(III) oxide** | 8.889 × 10⁻⁸ | 8.940 × 10⁻⁸ | 8.938 × 10⁻⁸ |
| **Silicon dioxide (trigonal)** | | | 3.723 × 10⁻⁵ |

**Table 4: Concentrate B (mol) (only concentrations > 1 × 10⁻⁶ mol)**

| **Component** | **Pass 1** | **pass 2** | **pass 3** |
|---|---|---|---|
| Water | 8.5114 | 9.6243 | 9.6414 |
| Hydrogen chloride | 2.1682 | 2.3109 | 2.4194 |
| Disodium oxide | 0.0438 | 0.0548 | 0.0487 |
| Magnesium oxide | 0.0555 | 0.1111 | 0.1666 |
| Calcium oxide | 0.9804 | 0.9807 | 0.9810 |
| Dipotassium oxide | 4.860 × 10⁻³ | 9.719 × 10⁻³ | 0.0146 |
| Hydrogen bromide | 8.135 × 10⁻⁴ | 1.627 × 10⁻⁵ | 2.441 × 10⁻³ |
| Carbon dioxide | 2.924 × 10⁻⁴ | 5.408 × 10⁻⁴ | 7.727 × 10⁻⁴ |
| Silicon dioxide (amorphous) | 1.068 × 10⁻⁴ | 2.136 × 10⁻⁴ | 2.832 × 10⁻⁴ |
| Hydrogen fluoride | 6.767 × 10⁻⁵ | 1.353 × 10⁻⁴ | 2.030 × 10⁻⁴ |
| Strontium monoxide | 9.245 × 10⁻⁵ | 1.849 × 10⁻⁴ | 2.773 × 10⁻⁴ |
| Argon | 1.502 × 10⁻⁵ | 3.004 × 10⁻⁵ | 4.506 × 10⁻⁵ |
| Dinitrogen pentoxide | 1.785 × 10⁻⁵ | 3.570 × 10⁻⁵ | 3.355 × 10⁻⁵ |
| Metaboric acid (monoclinic) | 4.255 × 10⁻⁴ | 8.510 × 10⁻⁴ | 1.276 × 10⁻⁴ |
| Sulphur trioxide | 8.610 × 10⁻⁵ | 8.475 × 10⁻⁵ | 6.692 × 10⁻⁵ |
| Dilithium oxide | 1.297 × 10⁻⁵ | 2.593 × 10⁻⁵ | 3.890 × 10⁻⁵ |

**Table 5 Concentrate C (only dissolved components) (mol) (only concentrations > 1 × 10⁻⁶ mol)**

| **Component** | **pass 1** | **pass 2** | **pass 3** |
|---|---|---|---|
| Water | 5.0000 | 5.0000 | 5.0000 |
| Hydrogen chloride | 2.1682 | 2.3109 | 2.4194 |
| Disodium oxide | 0.0438 | 0.0548 | 0.0487 |
| Magnesium oxide | 0.0555 | 0.1111 | 0.1666 |
| Calcium oxide | 0.9804 | 0.9807 | 0.9810 |
| Dipotassium oxide | 4.860 × 10⁻³ | 9.719 × 10⁻³ | 0.0146 |
| Hydrogen bromide | 8.135 × 10⁻⁴ | 1.627 × 10⁻³ | 2.440 × 10⁻³ |
| Carbon dioxide | 2.924 × 10⁻⁴ | 5.408 × 10⁻⁴ | 7.727 × 10⁻⁴ |
| Silicon dioxide (amorphous) | 1.068 × 10⁻⁴ | 2.136 × 10⁻⁴ | 2.832 × 10⁻⁴ |
| Hydrogen fluoride | 6.767 × 10⁻⁵ | 1.353 × 10⁻⁴ | 2.030 × 10⁻⁴ |
| Strontium monoxide | 9.245 × 10⁻⁵ | 1.849 × 10⁻⁴ | 2.773 × 10⁻⁴ |
| Argon | 1.502 × 10⁻⁵ | 3.004 × 10⁻⁵ | 4.506 × 10⁻⁵ |
| Dinitrogen pentoxide | 1.785 × 10⁻⁵ | 3.270 × 10⁻⁵ | 5.355 × 10⁻⁵ |
| Metaboric acid (monoclinic) | 4.255 × 10⁻⁴ | 8.510 × 10⁻⁴ | 1.276 × 10⁻³ |
| Sulphur trioxide | 8.610 × 10⁻⁵ | 8.475 × 10⁻⁵ | 6.692 × 10⁻⁵ |
| Dilithium oxide | 1.297 × 10⁻⁵ | 2.593 × 10⁻⁵ | 3.890 × 10⁻⁵ |

**Table 6 Solids formed in MD II in concentrate C (mol)**

| **Component** | **pass 1** | **pass 2** | **pass 3** |
|---|---|---|---|
| Sodium chloride | 0.0526 | 0.0749 | 0.0629 |
| Calcium carbonate | 3.201 × 10⁻⁵ | 4.408 × 10⁻⁵ | 3.601 × 10⁻⁵ |
| Calcium sulphate | 5.619 × 10⁻⁵ | 6.428 × 10⁻⁵ | 5.270 × 10⁻⁵ |
| Silicon dioxide (trigonal) | - | 7.530 × 10⁻⁵ | 1.502 × 10⁻⁴ |

### Example 2

Solution A is a CaCl₂ solution made with a concentration of 40 wt.% CaCl₂ in demineralised water. Solution A has a density (at 20 °C) of 1.395 g/ml. Solution B is a NaCl solution made with a concentration of 14 wt.% NaCl in demineralised water. Solution B has a density (at 20 °C) of 1.102 g/ml. Solution A and B are mixed in a weight ratio of 3 to 1.8 to produce the feed solution of the membrane distillation process. The feed solution then contains 25 wt.% CaCl₂ and 5.2 wt.% NaCl (with a density at 20 °C of 1.280 g/l).

A membrane/osmotic distillation setup is used with a single membrane sheet (0.051 m² surface area) and on both sides of the membrane first a flow channel for the supernatant on one side and the drawing liquid on the second side of the membrane. The membrane used is a hydrophobic membrane suitable for membrane distillation as described in WO-A-2000/72947. The obtained feed solution (supernatant) is circulated over the first side of the membrane at a temperature of 65 °C. On the second side of the membrane a drawing liquid is circulated at a temperature of 75 °C. This drawing liquid is a CaCl₂ solution with a concentration of 43-44 wt.%. Due to the temperature difference an average flux of pure water through the membrane is obtained of 0.5-1.5 J/m²·h. The produced pure water condensed into the drawing liquid which is in this lab setup regenerated by evaporation. The concentration of the drawing liquid is kept constant this way. Due to the evaporation of water through the membrane, the supernatant is concentrated (by 5 vol.%). The volume of pure water produced is replaced with a NaCl solution of 250 g/l (batch wise with an average interval of 15-30 minutes in which the supernatant is repeatedly concentrated (5 vol.%) and then again diluted to its original CaCl₂ concentration). After the maximum solubility of NaCl in the 25 wt.% CaCl₂ solution is exceeded, crystallisation takes place within the system. The produced crystals are partially collected in a settler vessel, and part of the crystals is kept in circulation due to the circulation velocity in the system. The superficial velocity in the membrane module is kept between 0.1 and 0.2 m/s.

Figure 2 shows the results of an experiment A performed as described in this example 2.

The used membrane area in the test cell is 0.051 m². From start up to timestamp t = 2.6 h, the solution on the feed side is not yet completely saturated. Evaporation of pure water from the feed (supernatant) to the distillate side and concentration of the feed occurs. This causes a reduction of vapour pressure on the feed side and therefore a reduction in driving force (vapour pressure difference) and as a consequence a reduction in flux. The concentration of the drawing liquid is kept between 43-44 wt.% of CaCl₂ (the first point in the graph at timestamp t = 0.7 h; equilibrium of temperature has not yet been reached)

On timestamp t = 2.6 h the first crystals are visible in the liquid of the feed.

From this point until the end of the experiment (timestamp 8.8 h) a total of 60 g of salt (NaCl) has been recovered and a total of 240 ml of pure water was transported through the membrane.

This results in an average water flux of 0.76 J/m²·h and a salt production of 0.19 kg/m²·h (per m² membrane area).

The temperature on the feed side was set at 65 °C and on the draw side at 75 °C.

The flux is defined as the total amount of water transported through the pores of the membrane in a period of time of one hour through a membrane with a contact area of 1 m².

The specific flux is defined as the total amount of water transported through the pores of the membrane in a period of time of 1 s through a membrane with a contact area of 1 m² at a vapour pressure difference of 1 Pa. The specific flux is obtained by dividing the measured flux through the vapour pressure difference (obtained from the measured temperature and fluid concentration).

The specific flux is used for comparison during an experiment to show the stability of the system, even when small variations in temperature and concentration show small variation in flux.

## Claims

1. Process for separating a first compound from an aqueous feed stream wherein the first compound is dissolved, comprising:
- adding a crystallisation agent to said feed stream, thereby causing at least part of said first compound to crystallise, resulting in a mixture of crystals and a liquid,
- separating at least part of the crystals from the liquid, leaving a supernatant,
- subjecting at least part of the supernatant to a membrane separation process, producing a concentrate;
wherein the crystallisation agent comprises a second compound with a higher solubility in water than the first compound.

2. Process according to claim 1, further comprising adding at least part of the concentrate to said feed stream as crystallisation agent.

3. Process according to any one of claims 1-2, wherein the first compound comprises one or more selected from the group consisting of inorganic salts, organic salts, organic compounds, polymers, sugars and proteins.

4. Process according to claim 3, wherein the first compound comprises sodium chloride.

5. Process according to claim 4, wherein the feed stream comprises one or more selected from the group consisting of seawater, seawater concentrate and sodium chloride brine.

6. Process according to any one of claims 1-5, wherein said second compound comprises a compound dissolved in the feed stream different from the first compound.

7. Process according to any one of claims 1-6, wherein the second compound comprises an inorganic salt, preferably one or more selected from the group consisting of magnesium chloride, calcium chloride, potassium chloride, magnesium bromide, calcium bromide and potassium bromide.

8. Process according to any one of claims 1-7, wherein the concentration of the first compound in the supernatant is reduced by 50 % or more, compared to the concentration of the first compound in the feed stream.

9. Process according to any one of claims 1-8, wherein the membrane separation process comprises one or more selected form the group consisting of membrane distillation, forward osmosis and osmotic distillation; preferably osmotic distillation.

10. Process according to any of claims 1-9 wherein during said membrane separation process one side of the membrane is contacted with said supernatant and the other side is contacted with a drawing liquid.

11. Process according to any one of claims 1-10, further comprising concentrating the feed stream prior to adding crystallisation agent.

12. Process according to any of claims 1-11, further comprising washing at least part of the separated crystals.

13. Process according to any of claims 2-12, further comprising replenishing said crystallisation agent at least in part.

14. Process according to any one of claims 1-13, wherein 50 wt.% or more of the first compound in the feed stream is crystallised and separated.

15. Process according to any one of claims 1-14, wherein the process is a continuous process.
